# EUROPEAN PATENT SPECIFICATION

(11) **EP 2 879 795 B1**
(45) Date of publication and mention of the grant of the patent: **25.03.2020**
(21) Application number: 13826165.6
(22) Date of filing: 26.07.2013
(51) Int. Cl.: B01L 3/00

(54) **VIAL CLOSURE WITH SEPTUM RETENTION FEATURE**
VERSCHLUSS EINES FLAKONS MIT SEPTUMSHALTEFUNKTION
FERMETURE DE FLACON AYANT UNE CARACTÉRISTIQUE DE RÉTENTION DE SEPTUM

(30) Priority: 31.07.2012 US 201213562654
(43) Date of publication of application: 10.06.2015
(73) Proprietor: National Scientific Company, Rockwood, TN 37854 (US)
(72) Inventor: SHICK, Leeman, Loy, Duluth, GA 30097-8118 (US)
(74) Representative: Sharrock, Daniel John
(86) International application number: PCT/US2013/052289
(87) International publication number: WO 2014/022229

(56) References cited:
- EP-A2- 1 400 283
- WO-A1-95/04685
- US-A- 4 423 821
- US-A1- 2004 131 506
- US-B2- 7 168 581

## Description

### FIELD OF THE INVENTION

The present invention relates generally to vial and closure assemblies and, more particularly, to a vial closure having a piercable septum or liner.

### BACKGROUND OF THE INVENTION

WO-A-95/04685 discloses a cap including a resilient liner which forms a closure for a container including a screw thread neck. EP-A-1400283 describes a two-piece cap assembly for closing an opening in a neck portion of a container. The assembly includes a cap body and a plug seal attached to the underside of the cap body.

Screw thread vials and closures are commonly used in laboratory applications for which effective sealing with near zero evaporation is important. When using conventional vial and closure assemblies, a user must be careful to apply a correct amount of torque when securing the closure to the vial. If a user fails to apply the correct amount of torque, then the assembly may fail to perform properly due to a non-uniform seal formed between the vial and closure. That is, fluids and/or vapors may escape from the vial via spillage and/or evaporation when a vapor-tight seal is not initially created or maintained.

Gas chromatography and high performance liquid chromatography applications are examples of laboratory techniques for which vapor-tight vial and closure assemblies are essential. The closures of chromatography vials often comprise a closure fitted with a piercable septum. When the closure is tightened onto the vial, the septum is compressed between the top wall of the closure and the rim of the vial to provide an essentially vapor-tight compression seal. Chromatography vials are often very small, such as 9 mm or 12 mm for example, and are typically constructed of glass or plastic.

Most solvents used in chromatography have a low vaporization point. It is important to have an effective compression seal against evaporation of the solvents used in gas chromatography and in high performance liquid chromatography applications. Particularly due to the small size of chromatography vials, it is oftentimes difficult to apply a consistent amount of torque to a plurality of closure and vial assemblies, i.e., from one to the next, particularly when multiple operators are handling the plurality of assemblies. If a closure is tilted in relation to the vial, a non-uniform or ineffective seal may occur with the vial rim that permits solvent evaporation. Even small amounts of evaporation may greatly affect the concentration of one or more solutes in the low volumes of solvent contained within the small vials. Moreover, tilting of the closure may complicate handling of the vial by robotic handling systems used in conventional autosamplers which are generally designed for a vial that has a cylindrical shape.

Another common problem with conventional chromatography vials provided with closures having piercable septums is that over-tightening of the closure with respect to the vial may result in at least a partial extrusion of the septum away from the sealing surfaces. This further reduces the likelihood of creating an effective fluid and vapor tight seal.

Vial and closure assemblies used for chromatography must also be capable of fully resealing after the septum is initially punctured. That is, when a needle penetrates and is withdrawn from the septum, the septum must resist being pushed through or being withdrawn from the cap. Such extrusion or withdrawal causes the seals to fail, increases the loss of solvent through evaporation and, thus, renders inaccurate results in chromatography applications using these vials of solvents.

Furthermore, over-torquing the closure with respect to the vial may create non-uniform, radial tension on the septum so that the septum does not present a generally planar piercing surface. This increases the risk of septum coring and/or needle bending in chromatography or autosampler instruments.

Because conventional vial and closure assemblies have not provided satisfactory solutions to the problems associated with creating an effectively vapor-tight seal, there remains a need for a vial and closure assembly that is capable of forming a vapor-tight seal, even while resisting an application of excessive torque or non-uniform seal between the vial and the closure, particularly for small vials.

### SUMMARY OF THE INVENTION

The present invention overcomes the foregoing problems and other shortcomings and drawbacks of known vial and closure assemblies. While the present invention will be described in connection with certain embodiments, it will be understood that the present invention is not limited to these embodiments. To the contrary, this invention includes all alternatives, modifications, and equivalents as may be included within the scope of the present invention.

The invention is directed at a closure for use with a vial having an open end defined by a vial rim and at least one outer thread, the closure being configured to be received by the open end of the vial and comprising a top wall, a skirt wall having an inner surface and depending from the top wall, an opening formed through the top wall, a septum, and a protrusion depending from the top wall, wherein, when the closure is threadably coupled to the vial, the protrusion is configured to engage the septum so that the septum creates an essentially vapor-tight seal with the vial rim.

According to the invention, the closure includes a septum pocket provided in the top wall, wherein the septum pocket communicates with the opening and is configured to receive and retain a compressible septum positioned within the septum pocket, and wherein the protrusion extends into the septum pocket, the septum is retained within the closure by the septum pocket alone and is at least partially exposed through the opening, an inner thread is provided on the inner surface of the skirt wall, and the protrusion has an inner surface and an outer surface that are asymmetric relative to a vertical plane extending through a peak of the protrusion.

According to one embodiment of the present invention, a vial and closure assembly includes a vial and a closure configured to be threadably coupled to the vial. The vial has an opening end that is defined by a vial rim and at least one thread located proximate to the open end of the vial.

The above and other objectives of the present invention shall be made apparent from the accompanying drawings and description thereof.

### BRIEF DESCRIPTION OF THE DRAWINGS

The accompanying drawings, which are incorporated in and constitute a part of this specification, illustrate embodiments of the present invention and, together with a general description of the invention given above, and the detailed description of the embodiments given below, serve to explain the principles of the present invention.
FIG. 1 is a perspective view of a vial and closure assembly in accordance with one embodiment of the present invention.
FIG. 2 is a side-elevational view of vial and closure assembly of FIG. 1, showing the vial and closure disassembled.
FIG. 2A is an enlarged view of a portion of the closure encircled 2A in FIG. 2.
FIG. 2B is a cross-sectional view of the closure as shown in FIG. 2, taken along the line 2B-2B, illustrating a protrusion configured to engage a septum so that the septum creates a fluid and vapor tight seal with the vial rim according to one embodiment of the present invention.
FIG. 2C is a cross-sectional view of a closure having a protrusion configured to engage a septum so that the septum creates a fluid and vapor tight seal with the vial rim in accordance with another embodiment of the present invention.
FIG. 3 is a side-elevational view of the vial and closure assembly of FIG. 1 in an assembled but non-fully torqued position.
FIG. 4 is a cross-sectional view taken along the line 4-4 of FIG. 3.
FIG. 5 is a view similar to FIG. 4 showing the vial and closure assembly in a fully torqued position.
FIG. 6 is a top view of the vial and closure assembly of FIG. 3 showing an uncompressed septum.
FIG. 7 is a top view of the vial and closure assembly of FIG. 5 showing a compressed septum.
FIG. 8 is a cross-sectional view of a vial according to another aspect of the present invention having a discontinuous outwardly projecting rib.
FIG. 9 is a bottom view of the closure shown in FIG. 1, with an inner thread of the closure removed for clarity.

### DETAILED DESCRIPTION OF THE INVENTION

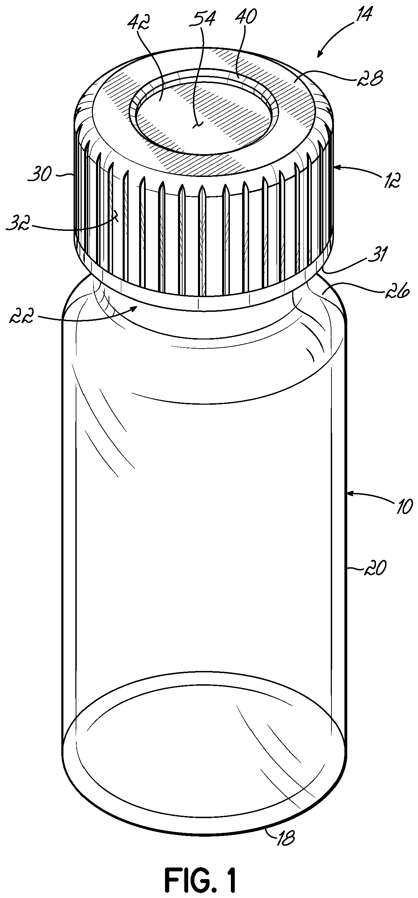

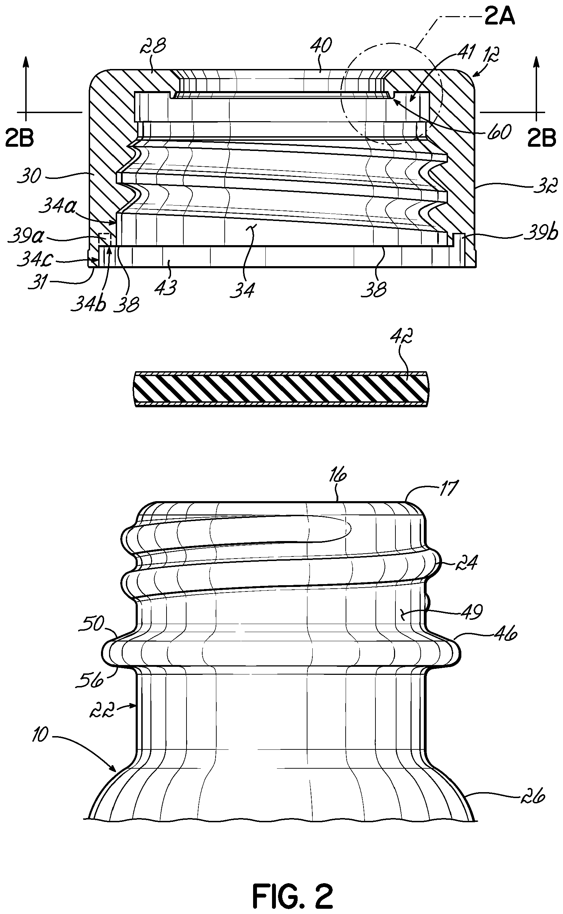

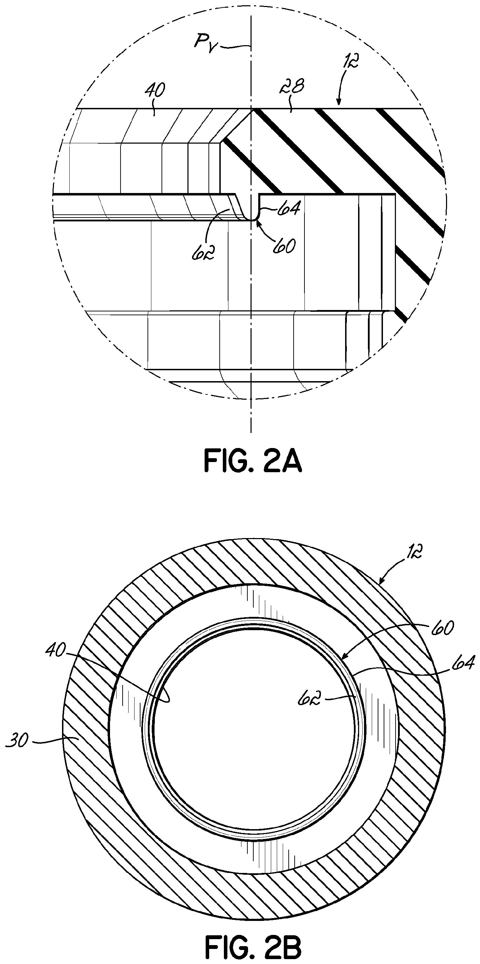

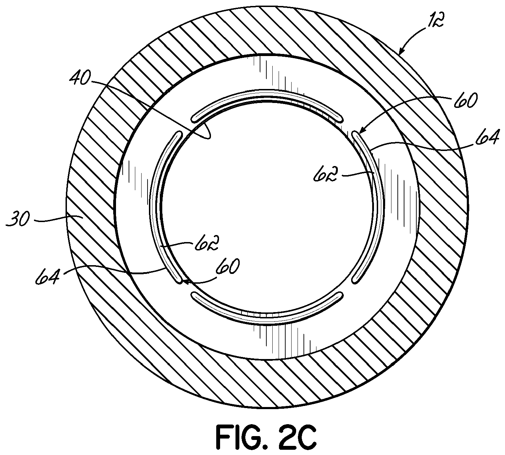

Turning now to the figures, and in particular to FIGS. 1 and 2, a vial 10 and a closure 12, collectively referred to as a vial and closure assembly 14, are shown according to one embodiment of the present invention. The vial 10 and the closure 12 may be configured as a labware product, such as a 2 mL chromatography vial for example, for use with manual or automatic (including robotic) analytical instruments.

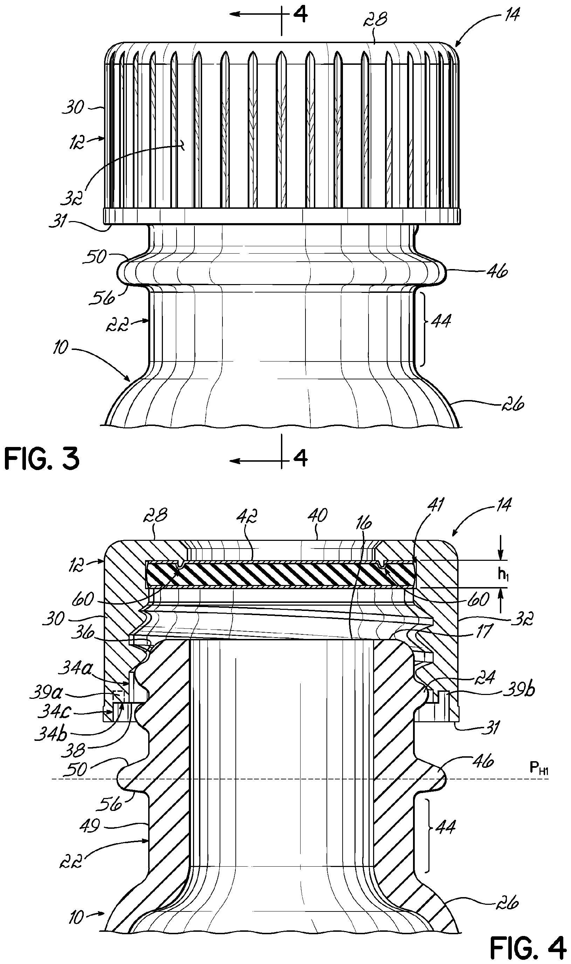

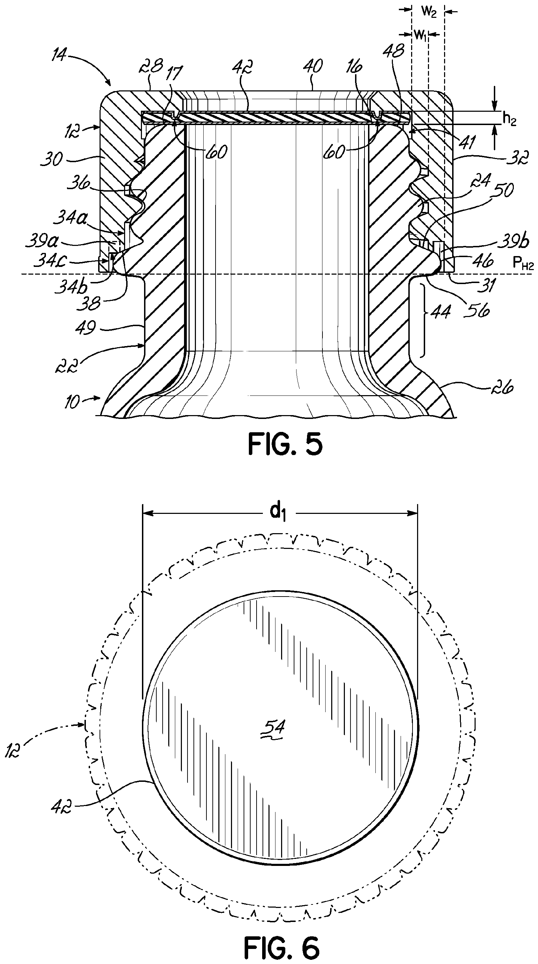

In one embodiment, the vial 10 is comprised of a hollow structure for the containment of a fluid and/or vapor and includes an open end 16 defined by a vial rim 17 (FIGS. 4 and 5) and a closed end 18. The open end 16 of the vial 10 may be generally circular and the hollow structure of the vial 10 may be constructed of glass, plastic, or other suitable material that is inert with respect to the fluid contained therein.

An outer surface of the vial 10 proximate the open end 16 (FIG. 3) may include at least one outer thread 24 (FIGS. 2-5) comprising, for example, an 8-425 thread, a 9-425 or 9 mm thread, a 10-425 thread, or any other suitable thread configuration that is configured to threadably couple with the closure 12. In the illustrated embodiment of FIGS. 2-5, the outer thread 24 of the vial 10 is a single thread. It will be readily appreciated that, in other embodiments, a series of multiple outer threads 24 may be used in place of a single, continuous outer thread 24. The outer thread 24 may further comprise a single turn or multiple turns of the vial 10. In one embodiment, the thread 24 comprises a 1-1/2 turn. As shown, the outer thread 24 is located on a neck 22 and extends down at least a portion of the neck 22. In this way, when the closure 12 is fully secured onto the vial 10, an uncovered portion 44 (FIG. 5) of the neck 22 remains.

Referring now to FIGS. 1-3, in some embodiments, such as the particular illustrative vial 10, the hollow structure of the vial 10 may include a body portion 20 and the neck 22 which extends substantially downward from the open end 16 of the vial 10. The neck 22 has an outer diameter that is generally smaller than an outer diameter of the body portion 20.

The vial 10 may also include a shoulder 26 at a base of the neck 22. The shoulder 26 forms a transition between the neck 22 and the body portion 20 and, therefore, may have an outer diameter that increases between the smaller, outer diameter of the neck 22 and the larger, outer diameter of the body portion 20. One particular advantage of the illustrative vial shape, including the neck 22 and shoulder 26, is that the shape facilitates manipulation by robotics, such as robotic chromatographs, autosamplers, and other laboratory instrumentation, as described in detail below.

Referring still to FIGS. 1 and 2, the closure 12 is constructed so as to be received by the open end 16 of the vial 10. The closure 12 has a top wall 28 and a skirt wall 30 that depends from the top wall 28. The skirt wall 30 terminates in a rim 31 that is located opposite the top wall 28. An outer surface 32 of the skirt wall 30 may have ridges or another textured surface to facilitate gripping of the closure 12 for turning of the closure 12 relative to the vial 10. An inner surface 34 of the skirt wall 30 of the closure 12 may have a portion 34a (FIG. 2) that is generally circular in cross section and has a diameter that is slightly larger than the outer diameter of the open end 16 of the vial 10. The skirt wall 30 of the closure 12 includes at least one inner thread 36 (FIG. 4) provided on the inner surface portion 34a that is configured to threadably cooperate with the outer thread 24 (FIG. 4) provided on the vial 10.

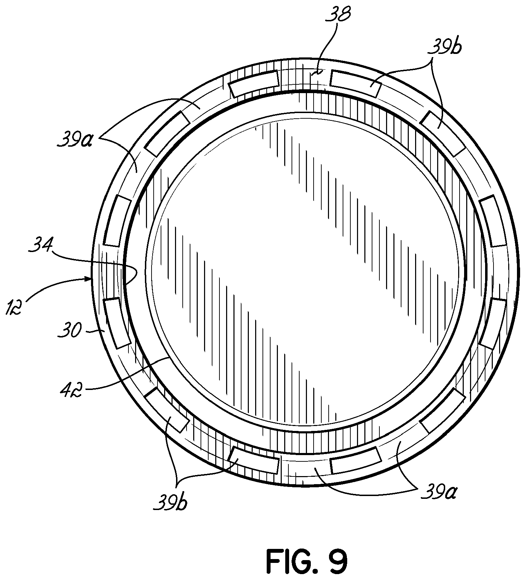

Although not required, the skirt wall 30 of the illustrative embodiment of the present invention further includes a stop surface 38 (FIGS. 2, 4 and 5) provided on a portion 34b (FIGS. 2 and 4) of the inner surface 34 of the skirt wall 30 such that the inner thread 36 is located between the stop surface 38 and the top wall 28 of the closure 12. In one embodiment, the stop surface 38 is integrally formed in the skirt wall 30 and is formed generally as a plurality of discrete, circumferentially spaced ledges 39a that are separated by a plurality of discrete, circumferentially spaced cavities 39b as shown in FIGS. 2, 4 and 9. The stop surface 38 forms a radially expanding transition between the portion 34a of the inner surface 34 of the skirt wall and a cylindrical surface 43 (FIG. 2) provided on a portion 34c (FIG. 2) of the inner surface 34 that has a diameter greater than the diameter of the inner surface portion 34a of the skirt wall 30 and extends from the stop surface 38 to the rim 31.

In the illustrative embodiment, the closure 12 includes an opening 40 formed through the top wall 28 and a septum pocket 41 (FIGS. 2, 4 and 5) communicating with the opening 40. The septum pocket 41 is configured to receive and retain a compressible septum 42 so that the septum 42 is at least partially exposed through the opening 40.

A protrusion 60 depends from the top wall 28, is spaced radially outwardly from the opening 40, and extends into the septum pocket 41. The protrusion 60 may be continuous, forming a circumferential ring about the opening 40 (as shown in FIG. 2B), or discontinuous, being constructed as a plurality of lugs (as shown in FIG. 2C). The protrusion 60 may have a sharp edge profile (including, for example, a triangular or acute angle curve) that is configured to engage the septum 42 when the vial 10 and the closure 12 are fully assembled. In that regard, the edge profile may have inner and outer surfaces that are symmetric with respect to a vertical plane (Pᵥ) extending through a peak of the protrusion 60 or, as shown in FIG. 2A, the inner surface 62 may form a larger angle with respect to the vertical plane Pᵥ while the outer surface 64 forms a smaller angle with respect to Pᵥ, i.e., the outer surface is more vertical. In this alternative embodiment, the inner and outer surfaces 62, 64 may be asymmetric relative to the vertical plane Pᵥ extending through the peak of the protrusion 60, when viewed in cross-section as shown in FIG. 2A.

When the vial 10 and the closure 12 are fully assembled, the septum 42 is compressed between the vial rim 17 and the top wall 28, generally, and with further compression between the vial rim 17 and the protrusion 60. This further compression causes the protrusion to engage the septum 42 so as to create an essentially fluid and vapor tight seal between the septum 42 and the vial rim 17 and to minimize evaporation of solvents from within the vial. In some instances, the septum 42 may be stretched over the vial rim 17 by the protrusion 60 to resist movement of the septum 42, even under excessive torque.

In an alternative embodiment (not shown), the closure 12 has a closed top without the opening 40 formed through the top wall 28. Rather than a septum 42, a conventional liner (not shown) may be provided between the top wall 28 of the closure 12 and the vial rim 17. When the vial 10 and the closure 12 are fully assembled, the liner (not shown) is compressed between the vial rim 17 and the top wall 28 of the closure 12 so that the liner (not shown) engages and creates a fluid and vapor tight seal with the vial rim.

In accordance with another aspect of the present invention, and as shown in FIGS. 2-5, the neck 22 of the vial 10 includes an outwardly projecting rib 46 which extends circumferentially around the neck 22 in one embodiment.

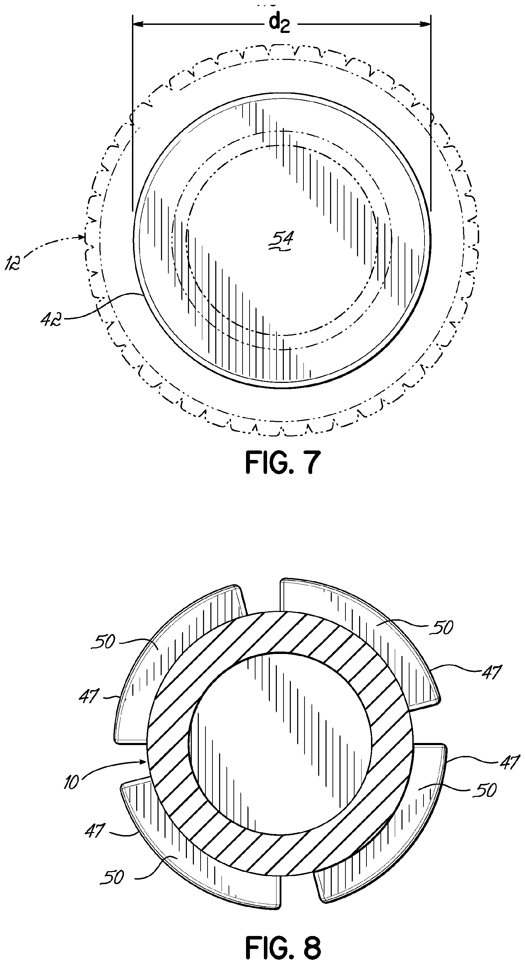

The outwardly projecting rib 46 may be either a single continuous rib, as shown in FIGS. 2-5, or one or more discontinuous ribs 47 as shown in the alternative embodiment of FIG. 8. As shown in FIG. 5, the outer thread 24 and the outwardly projecting rib 46 have respective maximum width dimensions "W₁" and "W₂" with respect to an outer surface 49 of the neck 22, with the maximum width dimension "W₂" being greater than the maximum width dimension "W₁." The outwardly projecting rib 46 lies in a generally horizontal plane "P_{H1}" (FIG. 4) that is parallel to the vial rim 17 and may be constructed from the same material as the vial 10, e.g., a bead of glass formed on a glass vial or a bead of plastic formed on a plastic vial. In one embodiment, the outwardly projecting rib 46 is asymmetrical, when viewed in cross section, relative to the generally horizontal plane "P_{H1}" extending through the maximum width dimension "W₂" of the outwardly projecting rib 46 as shown in FIG. 4. In the embodiment shown in FIGS. 2-5, the outwardly projecting rib 46 is located on the neck 22 above the shoulder 26 of the vial 10. Accordingly, when the closure 12 is fully secured to the vial 10, the uncovered portion 44 of the neck 22 remains.

The outwardly projecting rib 46 creates a stop surface 50 (FIGS. 2-4) that engages the stop surface 38 of the closure 12 when the closure 12 is threadably coupled to the vial 10. More particularly, the closure 12 may be positioned on the open end 16 of the vial 10 and threadably coupled with the outer thread 24 of the vial 10 until the stop surface 38 of the closure 12 engages the stop surface 50 of the outwardly projecting rib 46. In this way, the cooperation of the stop surface 38 of the closure 12 with the stop surface 50 of the outwardly projecting rib 46 prevents advancement of the closure 12 toward the closed end 18 of the vial 10 upon application of a torquing force onto the closure 12. This cooperation ensures a generally constant and uniform force is applied to the septum 42 around the circumference of the vial rim 17 for each of a plurality of assembled vials 10 and closures 12 to provide an effective compression seal against evaporation. In this way, over-tightening of the closure 12, which may lead to deformation and/or extrusion of the septum 42 from effective sealing contact with the vial rim 17, is prevented. Deformation and/or extrusion of the septum 42 reduces the vapor-tight seal of the assembly and may allow for undesirable evaporation of the solvents within the vial 10. In addition, the generally uniform compression force applied to the septum 42 around the circumference of the vial rim 17 ensures that the septum 42 creates a substantially planar piercing surface 54 at the open end 16 of the vial 10. The planar piercing surface 54 reduces the risk of septum 42 coring and/or bending of a needle (not shown) of a chromatography or autosampler instrument.

In one exemplary embodiment, as shown in FIG. 4, the septum 42 may have an uncompressed height or thickness "h₁" of about 1.02 mm. When the closure 12 is fully torqued to the vial 10, as described above, the septum 42 may have a compressed height or thickness "h₂" of about 0.57 mm as shown in FIG. 5.

The cooperation of the stop surface 38 of the closure 12 with the stop surface 50 of the outwardly projecting rib 46 also provides a settling surface for the horizontal alignment of the closure 12 on the vial 10 to reduce tilting of the closure 12 relative to the vial 10. In this way, the rim 31 of the closure 12 is aligned in a generally horizontal plane "P_{H2}" (FIG. 5) that is coincidental with a generally flattened annular surface 56 (FIGS. 2-5) provided on the outwardly projecting rib 46 opposite the stop surface 50 when the closure 12 is fully torqued to the vial 10 so as to provide a consistent horizontal lifting surface for an arm (not shown) of a robotic handling system commonly used in chromatography or autosampler instruments. In addition, the planar piercing surface 54 provides a more consistent thickness of septum material to be penetrated, which applies less resistant force to the needle.

By preventing further advancement of the closure 12 toward the closed end 18 of the vial 10 in response to over-torquing forces applied to the closure 12, the cooperation of the stop surface 38 of the closure 12 with the stop surface 50 of the outwardly projecting rib 46 ensures that the portion 44 of the neck 22 remains uncovered beneath the rim 31 of the closure 12. The uncovered neck 44 and shoulder portion 26 facilitate alignment and movement of the vial 10 by an arm (not shown) of a robotic handling system (not shown). That is, the arm may grasp the vial 10 between the rim 31 of the closure 12 and the shoulder 26 while a torquing device (not shown) of the robotic handling system applies a torquing force onto the closure 12 so as to couple or remove the closure 12 from the vial 10. Furthermore, the rim 31 of the closure 12 may further facilitate movement of the vial 10 within the robotic handling system, e.g., the arm of the robotic handling system may reside against the rim 31 of the closure 12 and apply an upwardly directed force thereto for lifting the vial 10.

FIGS. 6 and 7 show the vial and closure assembly 14 in un-torqued and torqued positions, respectively. In the un-torqued position, as shown in FIG. 6, the septum 42 has a diameter "d₁". In the torqued position, as shown in FIG. 7, the stop surface 38 of the closure 12 engages the outwardly projecting rib 46, and the septum 42 is axially expanded to an increased diameter "d₂" to form an essentially fluid and vapor tight seal between the vial 10 and the top wall of the closure 12.

While the present invention has been illustrated by description of various embodiments and while those embodiments have been described in considerable detail, it is not the intention of applicant to restrict or in any way limit the scope of the appended claims to such details. Additional advantages and modifications will readily appear to those skilled in the art. The invention in its broader aspects is therefore not limited to the specific details and illustrative examples shown and described. Accordingly, departures may be made from such details without departing from the scope of applicant's invention, which is defined in the appended claims.

## Claims

1. A closure (12) for use with a vial (10) having an open end (16) defined by a vial rim (17) and at least one outer thread (24), the closure being configured to be received by the open end of the vial and comprising:
a top wall (28);
a skirt wall (30) having an inner surface (34) and depending from the top wall;
an opening (40) formed through the top wall;
a septum (42); and
a protrusion (60) depending from the top wall,
wherein, when the closure is threadably coupled to the vial (10), the protrusion is configured to engage the septum (42) so that the septum creates an essentially vapor-tight seal with the vial rim (17),
**characterised in that**
the closure includes a septum pocket (41) provided in the top wall, wherein the septum pocket communicates with the opening and is configured to receive and retain a compressible septum (42) positioned within the septum pocket, and wherein the protrusion (60) extends into the septum pocket;
the septum (42) is retained within the closure by the septum pocket (41) alone and is at least partially exposed through the opening (40);
an inner thread (36) is provided on the inner surface (34) of the skirt wall (30); and
the protrusion (60) has an inner surface (62) and an outer surface (64) that are asymmetric relative to a vertical plane (Pᵥ) extending through a peak of the protrusion.

2. The closure of claim 1, wherein the protrusion (60) is further configured to stretch the septum (42) relative to the vial rim (17) to secure the septum to the vial rim, and its inner surface (62) forms a larger angle with respect to the vertical plane (Pᵥ) and its outer surface (64) forms a smaller angle with respect to the vertical plane.

3. The closure of claim 1 or claim 2, wherein the protrusion (60) comprises a plurality of discrete, circumferentially spaced lugs, spaced radially outwardly from the opening (40).

4. The closure of claim 1 or claim 2, wherein the protrusion (60) comprises a continuous, circumferential rib spaced radially outwardly from the opening (40).

5. A vial and closure assembly (14), comprising:
a vial (10) having an open end (16) defined by a vial rim (17) and at least one outer thread (24) located proximate the open end of the vial; and
a closure (12) of any preceding claim.

6. The closure of any of claims 1 to 4 or the vial and closure assembly of claim 5, wherein the vial (10) further comprises an outwardly projecting rib (46).

7. The closure or the vial and closure assembly of claim 6, wherein the at least one outer thread (24) is located between the outwardly projecting rib (46) and the vial rim (17), the outwardly projecting rib and the at least one outer thread having respective first and second maximum width dimensions (W₂,W₁) extending outwardly from an outer surface (49) of the vial, with the first maximum width dimension (W₂) being greater than the second maximum width dimension (W₁), and the closure further comprises:
a stop surface (38) provided on the inner surface of the skirt wall, with the inner thread (36) being located between the stop surface and the top wall (28) of the closure,
wherein the stop surface is configured to engage the outwardly projecting rib when the closure is threadably coupled to the vial so as to prevent advancement of the closure upon application of a torquing force onto the closure.

8. The closure or the vial and closure assembly of claim 7, wherein the outwardly projecting rib (46) is located adjacent the at least one outer thread (24) provided on the vial (10).

9. The closure or the vial and closure assembly of claim 7, wherein the stop surface (38) comprises a plurality of discrete, circumferentially spaced ledges (39a).

10. The vial and closure assembly of claim 8, wherein the skirt wall (30) terminates in a rim (31) located opposite the top wall (28) of the closure (12), the outwardly projecting rib (46) provided on the vial (10) and the stop surface (38) provided on the closure are configured to cooperate when the closure is threadably coupled to the vial so that the rim of the skirt wall is aligned generally in a horizontal plane, and so that a generally constant force is applied to the septum (42) around the circumference of the vial rim (17).

11. The vial and closure assembly of claim 5 when dependent on claim 1, wherein the open end (16) of the vial (10) further comprises a neck (22) having the at least one outer thread (24) located on the neck.

12. The vial and closure assembly of claim 5 when dependent on claim 1, wherein the outwardly projecting rib (46) is continuous about the circumference of the vial neck (22).

## Patentansprüche

1. Verschluss (12) für die Verwendung mit einer Ampulle (10) mit einem offenen Ende (16), das durch einen Ampullenrand (17) definiert ist, und mindestens einem Außengewinde (24), wobei der Verschluss so konfiguriert ist, dass er von dem offenen Ende der Ampulle aufgenommen wird, und umfassend:
eine obere Wand (28);
eine Schürzenwand (30) mit einer Innenfläche (34), wobei die Schürzenwand von der oberen Wand abhängt;
eine Öffnung (40), die durch die obere Wand gebildet ist;
eine Trennwand (42); und
einen Vorsprung (60), der von der oberen Wand abhängt, wobei, wenn der Verschluss verschraubbar mit der Ampulle (10) gekoppelt ist, der Vorsprung dafür konfiguriert ist, mit der Trennwand (42) in Eingriff zu kommen, sodass die Trennwand eine im Wesentlichen dampfdichte Abdichtung mit dem Ampullenrand (17) erzeugt, **dadurch gekennzeichnet, dass** der Verschluss eine Trennwandtasche (41) aufweist, die in der oberen Wand vorgesehen ist, wobei die Trennwandtasche mit der Öffnung in Verbindung steht und dafür konfiguriert ist, eine zusammendrückbare Trennwand (42) aufzunehmen und zu halten, die in der Trennwandtasche positioniert ist, und wobei sich der Vorsprung (60) in die Trennwandtasche erstreckt;
die Trennwand (42) allein durch die Trennwandtasche (41) in dem Verschluss gehalten wird und zumindest teilweise durch die Öffnung (40) freigelegt ist;
ein Innengewinde (36) an der Innenfläche (34) der Schürzenwand (30) vorgesehen ist; und
der Vorsprung (60) eine Innenfläche (62) und eine Außenfläche (64) aufweist, die bezüglich einer vertikalen Ebene (Pᵥ), die sich durch eine Spitze des Vorsprungs erstreckt, asymmetrisch sind.

2. Verschluss nach Anspruch 1, wobei der Vorsprung (60) weiter konfiguriert ist, um die Trennwand (42) relativ zu dem Ampullenrand (17) zu dehnen, um die Trennwand an dem Ampullenrand zu befestigen, und dessen Innenfläche (62) einen größeren Winkel in Bezug auf die vertikale Ebene (Pᵥ) bildet und dessen Außenfläche (64) einen kleineren Winkel in Bezug auf die vertikale Ebene bildet.

3. Verschluss nach Anspruch 1 oder Anspruch 2, wobei der Vorsprung (60) mehrere einzelne, in Umfangsrichtung beabstandete Ansätze umfasst, die radial nach außen von der Öffnung (40) beabstandet sind.

4. Verschluss nach Anspruch 1 oder Anspruch 2, wobei der Vorsprung (60) eine durchgehende, umlaufende Rippe umfasst, die radial nach außen von der Öffnung (40) beabstandet ist.

5. Aufbau aus Ampulle und Verschluss (14), umfassend:
eine Ampulle (10) mit einem offenen Ende (16), das durch einen Ampullenrand (17) und mindestens ein Außengewinde (24) definiert ist, das sich in der Nähe des offenen Endes der Ampulle befindet; und
einen Verschluss (12) nach einem der vorhergehenden Ansprüche.

6. Verschluss nach einem der Ansprüche 1 bis 4 oder Aufbau aus Ampulle und Verschluss nach Anspruch 5, wobei die Ampulle (10) weiterhin eine nach außen vorstehende Rippe (46) umfasst.

7. Verschluss oder Aufbau aus Ampulle und Verschluss nach Anspruch 6, wobei sich das mindestens eine Außengewinde (24) zwischen der nach außen vorstehenden Rippe (46) und dem Ampullenrand (17) befindet, wobei die nach außen vorstehenden Rippe und das mindestens eine Außengewinde jeweils eine erste und eine zweite maximale Breitenabmessung (W₂, W₁) aufweisen, die sich von einer Außenfläche (49) der Ampulle nach außen erstreckt, wobei die erste maximale Breitenabmessung (W₂) größer als die zweite maximale Breitenabmessung ist (W₁) und der Verschluss ferner umfasst:
eine Anschlagfläche (38), die an der Innenfläche der Schürzenwand vorgesehen ist, wobei das Innengewinde (36) zwischen der Anschlagfläche und der oberen Wand (28) des Verschlusses angeordnet ist, wobei die Anschlagfläche konfiguriert ist, um in die nach außen vorstehende Rippe einzugreifen, wenn der Verschluss mit der Ampulle verschraubbar gekoppelt ist, um ein Vorschieben des Verschlusses beim Aufbringen einer Drehmomentkraft auf den Verschluss zu verhindern.

8. Verschluss oder Aufbau aus Ampulle und Verschluss nach Anspruch 7, wobei sich die nach außen vorstehende Rippe (46) angrenzend an das mindestens eine Außengewinde (24), das auf der Ampulle (10) vorgesehen ist, befindet.

9. Verschluss oder Aufbau aus Ampulle und Verschluss nach Anspruch 7, wobei die Anschlagfläche (38) eine Vielzahl von einzelnen, in Umfangsrichtung beabstandeten Leisten (39a) umfasst.

10. Aufbau aus Ampulle und Verschluss nach Anspruch 8, wobei die Schürzenwand (30) in einem Rand (31) endet, der sich gegenüber der oberen Wand (28) des Verschlusses (12) befindet, wobei die nach außen ragende Rippe (46), die auf der Ampulle (10) vorgesehen ist, und die Anschlagfläche (38), am Verschluss vorgesehen ist, so konfiguriert sind, dass sie zusammenwirken, wenn der Verschluss verschraubbar mit der Ampulle gekoppelt ist, sodass der Rand der Schürzenwand im Allgemeinen in einer horizontalen Ebene ausgerichtet ist, und sodass eine im Allgemeinen konstante Kraft auf die Trennwand (42) um den Umfang des Ampullenrandes (17) ausgeübt wird.

11. Aufbau aus Ampulle und Verschluss nach Anspruch 5, wenn dieser von Anspruch 1 abhängt, wobei das offene Ende (16) der Ampulle (10) ferner einen Hals (22) umfasst, bei dem sich das wenigstens eine Außengewinde (24) auf dem Hals befindet.

12. Aufbau aus Ampulle und Verschluss nach Anspruch 5, wenn dieser von Anspruch 1 abhängt, wobei die nach außen vorstehende Rippe (46) um den Umfang des Ampullenhalses durchgehend ist (22).

## Revendications

1. Bouchon (12) à utiliser avec un flacon (10) ayant une extrémité ouverte (16) définie par un rebord de flacon (17) et au moins un filetage extérieur (24), le bouchon étant conçu pour être reçu par l'extrémité ouverte du flacon et comprenant :
une paroi supérieure (28) ;
une paroi de jupe (30) ayant une surface intérieure (34) et dépendant de la paroi supérieure ;
une ouverture (40) formée à travers la paroi supérieure ;
un septum (42) ; et
une saillie (60) dépendant de la paroi supérieure,
dans laquelle, lorsque le bouchon est accouplé par filetage au flacon (10), la saillie est conçue pour venir en prise avec le septum (42) de sorte que le septum crée un joint essentiellement étanche à la vapeur avec le rebord de flacon (17),
**caractérisé en ce que**
le bouchon comporte une poche à septum (41) fournie dans la paroi supérieure, dans laquelle la poche à septum communique avec l'ouverture et est conçue pour recevoir et retenir un septum compressible (42) positionné à l'intérieur de la poche à septum, et dans lequel la saillie (60) s'étend dans la poche à septum ;
le septum (42) est retenu à l'intérieur du bouchon par la poche à septum (41) seulement et est au moins partiellement exposé à travers l'ouverture (40) ;
un filetage intérieur (36) est fourni sur la surface intérieure (34) de la paroi de jupe (30) ; et
la saillie (60) a une surface intérieure (62) et une surface extérieure (64) qui sont asymétriques par rapport à un plan vertical (Pᵥ) s'étendant à travers un sommet de la saillie.

2. Bouchon selon la revendication 1, dans lequel la saillie (60) est en outre conçue pour étirer le septum (42) par rapport au rebord du flacon (17) afin de fixer le septum au rebord du flacon, et sa surface intérieure (62) forme un angle plus grand par rapport au plan vertical (Pᵥ) et sa surface extérieure (64) forme un angle plus petit par rapport au plan vertical.

3. Bouchon selon la revendication 1 ou la revendication 2, dans lequel la saillie (60) comprend une pluralité de crans distincts, espacés circonférentiellement, espacés radialement vers l'extérieur depuis l'ouverture (40).

4. Bouchon selon la revendication 1 ou la revendication 2, dans lequel la saillie (60) comprend une nervure circonférentielle continue espacée radialement vers l'extérieur depuis l'ouverture (40).

5. Ensemble flacon et bouchon (14), comprenant :
un flacon (10) ayant une extrémité ouverte (16) définie par un rebord de flacon (17) et au moins un filetage extérieur (24) situé à proximité de l'extrémité ouverte du flacon ; et
un bouchon (12) selon l'une quelconque des revendications précédentes.

6. Bouchon selon l'une quelconque des revendications 1 à 4 ou ensemble flacon et bouchon selon la revendication 5, dans lequel le flacon (10) comprend en outre une nervure faisant saillie vers l'extérieur (46).

7. Bouchon ou ensemble flacon et bouchon selon la revendication 6, dans lequel l'au moins un filetage extérieur (24) est situé entre la nervure faisant saillie vers l'extérieur (46) et le rebord du flacon (17), la nervure faisant saillie vers l'extérieur et l'au moins un filetage extérieur ayant des première et seconde dimensions de largeur maximale (W₂, W₁) respectives s'étendant vers l'extérieur depuis une surface extérieure (49) du flacon, la première dimension de largeur maximale (W₂) étant supérieure à la seconde dimension de largeur maximale (W₁), et le bouchon comprenant en outre :
une surface d'arrêt (38) fournie sur la surface intérieure de la paroi de jupe, le filetage intérieur (36) étant situé entre la surface d'arrêt et la paroi supérieure (28) du bouchon,
la surface d'arrêt étant conçue pour venir en prise avec la nervure faisant saillie vers l'extérieur lorsque le bouchon est accouplé par filetage au flacon de manière à empêcher l'avancement du bouchon lors de l'application d'une force de serrage sur le bouchon.

8. Bouchon ou ensemble flacon et bouchon selon la revendication 7, dans lequel la nervure faisant saillie vers l'extérieur (46) est située à côté du au moins un filetage extérieur (24) fourni sur le flacon (10).

9. Bouchon ou ensemble flacon et bouchon selon la revendication 7, dans lequel la surface d'arrêt (38) comprend une pluralité d'aspérités distinctes, espacées circonférentiellement (39a).

10. Ensemble flacon et bouchon selon la revendication 8, dans lequel la paroi de jupe (30) se termine par un rebord (31) situé en face de la paroi supérieure (28) du bouchon (12), la nervure faisant saillie vers l'extérieur (46) fournie sur le flacon (10) et la surface d'arrêt (38) fournie sur le bouchon sont conçues pour coopérer lorsque le bouchon est accouplé par filetage au flacon de telle sorte que le rebord de la paroi de jupe est aligné généralement dans un plan horizontal, et de telle sorte qu'une force généralement constante est appliquée au septum (42) autour de la circonférence du rebord du flacon (17).

11. Ensemble flacon et bouchon selon la revendication 5, lorsqu'elle dépend de la revendication 1, dans lequel l'extrémité ouverte (16) du flacon (10) comprend en outre un col (22) ayant l'au moins un filetage extérieur (24) situé sur le col.

12. Ensemble flacon et bouchon selon la revendication 5, lorsqu'elle dépend de la revendication 1, dans lequel la nervure faisant saillie vers l'extérieur (46) est continue sur la circonférence du col du flacon (22).
